# EUROPÄISCHE PATENTSCHRIFT

(11) **EP 3 685 465 B1**
(45) Veröffentlichungstag und Bekanntmachung des Hinweises auf die Patenterteilung: **14.06.2023**
(21) Anmeldenummer: 18769990.5
(22) Anmeldetag: 12.09.2018
(51) Int. Cl.: H01M 10/0525, H01M 10/0562, H01M 10/48, G01N 27/30, G01R 31/36

(54) **FESTKÖRPERELEKTROLYTZELLE UND VERFAHREN ZUM HERSTELLEN EINER FESTKÖRPERELEKTROLYTZELLE**
SOLID ELECTROLYTE CELL AND METHOD FOR PRODUCING A SOLID ELECTROLYTE CELL
CELLULE À ÉLECTROLYTE SOLIDE ET PROCÉDÉ DE FABRICATION D'UNE CELLULE À ÉLECTROLYTE SOLIDE

(30) Priorität: 19.09.2017 DE 102017216518
(43) Veröffentlichungstag der Anmeldung: 29.07.2020
(73) Patentinhaber: Robert Bosch GmbH, 70442 Stuttgart (DE)
(72) Erfinder: SCHUMANN, Bernd, 71277 Rutesheim (DE); SEROUT, Anne, 70193 Stuttgart (DE)
(86) Internationale Anmeldenummer: PCT/EP2018/074635
(87) Internationale Veröffentlichungsnummer: WO 2019/057587

(56) Entgegenhaltungen:
- DE-A1-102012 202 433
- DE-A1-102012 202 433
- DE-A1-102014 219 723
- DE-A1-102015 201 532
- DE-A1-102015 226 296
- US-A1- 2011 250 478
- US-A1- 2013 323 542
- US-B1- 8 679 677

## Beschreibung

### Gebiet der Erfindung

Die Erfindung betrifft eine Batteriezelle in Form einer Festkörperelektrolytzelle und ein Verfahren zum Herstellen einer Festkörperelektrolytzelle.

### Stand der Technik

Bei einer Batteriezelle kann eine Referenzelektrode verwendet werden, um interne elektrochemische Prozesse zu überwachen. Bei Verwendung eines flüssigen Elektrolyten in der Batteriezelle kann die Referenzelektrode im Flüssigelektrolyten angeordnet werden. Im einfachsten Fall kann ein isolierter Draht mit blankem Ende in den Elektrolyten angeordnet werden. Da die Anode und Kathode der Batteriezelle durch einen Separator elektrisch voneinander isoliert sind, kann der Draht keinen Kurzschluss der Batteriezelle verursachen.

Aus dem Dokument DE 10 2012 202433 A1 ist eine Batteriezelle mit einem Gehäuse und mit einer Sensorvorrichtung bekannt, wobei die Sensorvorrichtung eine Referenzelektrode aufweist, die innerhalb des Gehäuses der Batteriezelle in ionischem Kontakt mit einem Elektrolyten angeordnet ist.

Aus dem Dokument US 8,679,677 B1 ist eine Batterie bekannt, die eine Referenzelektrode mit einem Separatormaterial aufweist.

Aus dem Dokument US 2013/0323542 A1 ist eine Batterie bekannt, die eine Referenzelektrode auf einem Separator der Batterie aufweist.

### Offenbarung der Erfindung

Vor diesem Hintergrund werden mit dem hier vorgestellten Ansatz ein Verfahren zum Herstellen einer Batteriezelle in Form einer Festkörperelektrolytzelle und eine Festkörperelektrolytzelle gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, eine Referenzelektrode in einer Festkörperelektrolytzelle zu verwenden. Elektrochemische Prozesse in der Festkörperelektrolytzelle können durch die Referenzelektrode überwacht werden, insbesondere lokal überwacht werden. Die Referenzelektrode kann mit geringem Verlust an Reaktionsfläche in die Festkörperelektrolytzelle integriert werden.

Es wird eine Festkörperelektrolytzelle vorgestellt, die dadurch gekennzeichnet ist, dass zumindest eine Referenzelektrode in einem Elektrolytfestkörper der Festkörperelektrolytzelle eingebettet ist, wobei ein Reaktionsbereich der Referenzelektrode ionenleitend mit dem Elektrolytfestkörper verbunden ist und elektrisch von einer Arbeitselektrode der Festkörperelektrolytzelle isoliert ist.

Weiterhin wird ein Verfahren zum Herstellen einer Festkörperelektrolytzelle vorgestellt, das dadurch gekennzeichnet ist, dass in einem Schritt des Einbettens eine Referenzelektrode in einen Elektrolytfestkörper der Festkörperelektrolytzelle eingebettet wird, wobei ein Reaktionsbereich der Referenzelektrode ionenleitend mit dem Elektrolytfestkörper verbunden wird und elektrisch von einer Arbeitselektrode der Festkörperelektrolytzelle isoliert wird.

Ideen zu Ausführungsformen der vorliegenden Erfindung können unter anderem als auf den nachfolgend beschriebenen Gedanken und Erkenntnissen beruhend angesehen werden.

Eine herkömmliche Referenzelektrode besteht aus einem Draht, welcher in eine Flüssigelektrolytzelle eingebracht wird. Um die elektrische Isolation hin zu den Standardelektroden zu gewährleisten, werden Separatorschichten benötigt. Anschließend wird die Zelle mit Flüssigelektrolyt befüllt.

Da der Festkörperlelektrolyt in einer Festkörperelektrolytzelle die Funktion des flüssigen Elektrolyten und die des Separators in einer Komponente übernimmt, kann die Referenzelektrode direkt im Festkörperelektrolyt angebracht werden. Es werden keine weiteren Separatorschichten benötigt. Durch die hier vorgestellte, beispielsweise aus Polyimid bestehende elektrische Isolation der Referenzelektrode ist eine elektrische Kontaktierung und Zusammenführung von mehreren Elektroden stark vereinfacht.

Unter einer Festkörperelektrolytzelle kann eine Batteriezelle mit einem Elektrolyten in fester Form verstanden werden. Die Festkörperelektrolytzelle weist keinen flüssigen oder gelförmigen Elektrolyten auf. Die Festkörperelektrolytzelle weist auch nicht notwendigerweise Separatoren zum elektrischen Isolieren der Anode von der Kathode auf. Ein Elektrolytfestkörper aus einem ionenleitfähigen Material wird zwischen der Anode und der Kathode angeordnet. Der Elektrolytfestkörper beabstandet die Anode von der Kathode und isoliert sie elektrisch voneinander. Die Ionen, die für den Transport von chemischer bzw. elektrischer Energie zwischen Anode und Kathode erforderlich sind, können den Elektrolytfestkörper passieren.

Eine Referenzelektrode ist ein Fühler zum Erfassen einer lokalen Konzentration der Ionen. Die Referenzelektrode bildet die lonenkonzentration in einem elektrischen Signal ab. Die Referenzelektrode beeinflusst eine Zellchemie der Festkörperelektrolytzelle vorzugsweise nicht beziehungsweise nur minimal. Die Referenzelektrode kann an der Anode als Mini-Anode bezeichnet werden. An der Kathode kann die Referenzelektrode als Mini-Kathode bezeichnet werden. Ein Reaktionsbereich ist eine zu dem Elektrolytfestkörper hin ionendurchgängig offene Grenzfläche, an der eine von der lonenkonzentration abhängige Gleichgewichtsreaktion der Referenzelektrode mit den Ionen stattfindet.

Die Referenzelektrode kann schichtweise aufgebaut sein. Eine elektrisch isolierende Isolierschicht der Referenzelektrode kann zwischen einer den Reaktionsbereich ausbildenden elektrisch leitenden Leitschicht der Referenzelektrode und der Arbeitselektrode angeordnet sein. Die Leitschicht kann insbesondere zwischen 10 µm und 0,1 µm, vorzugsweise zwischen 5 µm und 0,5 µm, weiter vorzugsweise zwischen 2 µm und 1 µm dick sein. Die elektrisch isolierende Isolierschicht der Referenzelektrode kann zwischen der elektrisch leitenden Leitschicht der Referenzelektrode und der Arbeitselektrode angeordnet werden. Der Elektrolytfestkörper kann auf dem Reaktionsbereich und der Arbeitselektrode abgeschieden werden. Die Isolierschicht kann ebenfalls zwischen 10 µm und 0,1 µm, insbesondere zwischen 5 µm und 0,5 µm, weiter insbesondere zwischen 2 µm und 1 µm dick sein. Der Elektrolytfestkörper kann zwischen 50 µm und 1µm, insbesondere zwischen 30 µm und 3 µm, weiter insbesondere zwischen 20 µm und 5 µm dick sein. Die Isolierschicht kann mit der Leitschicht zusammen, d.h. in einem gemeinsamen Arbeitsgang, hergestellt werden und auf der Arbeitselektrode angeordnet werden. Die Isolierschicht und die Leitschicht können auch nacheinander auf der Arbeitselektrode abgeschieden werden.

Die Isolierschicht kann aus einem Polyimidmaterial bestehen. Durch Abscheiden kann Polyimid mit einer geringen Schichtdicke erzeugt werden. Das Material weist gute elektrische Isoliereigenschaften auf.

Eine weitere Isolierschicht kann auf einer von der Arbeitselektrode abgewandten Seite der Leitschicht angeordnet sein. Die weitere Isolierschicht kann gleiche oder ähnliche Eigenschaften aufweisen wie die zuvor beschriebene Isolierschicht. Der Reaktionsbereich kann durch zumindest eine der Isolierschichten ausgespart sein, d.h. im Reaktionsbereich kann die Leitschicht lokal freiliegen und nicht von einer der Isolierschichten überdeckt sein. Die Referenzelektrode kann mit einer zwischen zwei Isolierschichten elektrisch isolierten Leitschicht auf der Arbeitselektrode angeordnet werden. Der Reaktionsbereich kann durch zumindest eine der Isolierschichten ausgespart werden. Die Isolierschicht kann einen positionsmäßigen Versatz gegenüber der Leitschicht aufweisen. Durch den Versatz bedeckt die Isolierschicht die Leitschicht nicht vollständig.

Der Reaktionsbereich kann an einer Kante der Arbeitselektrode ausgerichtet sein oder von dieser nur geringfügig (d.h. beispielsweise weniger als 1 mm, vorzugsweise weniger als 0,1 mm) beabstandet sein und somit allenfalls geringfügig in einen Innenbereich der Festkörperelektrolytzelle hinein ragen. Durch die Ausrichtung oder Anordnung an der Kante kann die Referenzelektrode wenig Fläche der eigentlichen Festkörperelektrolytzelle belegen.

Die Referenzelektrode kann zumindest im Reaktionsbereich ein Aktivmaterial der Arbeitselektrode aufweisen. Die Referenzelektrode kann mit einer mit dem Reaktionsbereich ionenleitend verbundenen Startschicht aus Elektrolytfestkörpermaterial eingebettet werden. Der Elektrolytfestkörper der Batteriezelle kann auf der Startschicht und der Arbeitselektrode abgeschieden werden. Alternativ kann der Reaktionsbereich der Referenzelektrode in blankem Zustand eingebettet werden. In einem nachfolgenden Schritt des Anlagerns können Ionen aus dem Elektrolytfestkörper an den Reaktionsbereich angelagert werden. Die Referenzelektrode kann elektrochemisch gleich der ihr zugeordneten Arbeitselektrode sein. Dadurch ist das elektrische Signal der Referenzelektrode einfach auswertbar, da die elektrischen Potenziale zwischen den Arbeitselektroden und der Referenzelektrode und der anderen Arbeitselektrode direkt verglichen werden können.

Die Referenzelektrode kann mit einem über eine Kante der Arbeitselektrode ragenden Anschlussbereich eingebettet werden. Die Referenzelektrode kann vorgefertigt werden und auf der Arbeitselektrode platziert werden, bevor die Festkörperelektrolytzelle weiter aufgebaut wird.

Es wird darauf hingewiesen, dass einige der möglichen Merkmale und Vorteile der Erfindung hierin mit Bezug auf unterschiedliche Ausführungsformen als Festkörperelektrolytzelle und als Verfahren zum Herstellen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Schnittdarstellung einer Festkörperelektrolytzelle gemäß einem Ausführungsbeispiel;
Fig. 2 zeigt eine Darstellung einer Festkörperelektrolytzelle gemäß einem Ausführungsbeispiel;
Fig. 3 zeigt eine Detaildarstellung einer Referenzelektrode für eine Festkörperelektrolytzelle gemäß einem Ausführungsbeispiel;
Fig. 4 zeigt eine Schnittdarstellung einer Festkörperelektrolytzelle mit einer Referenzelektrode mit einer Startschicht gemäß einem Ausführungsbeispiel;
Fig. 5 zeigt eine Detaildarstellung einer Referenzelektrode mit einer Startschicht für eine Festkörperelektrolytzelle gemäß einem Ausführungsbeispiel; und
Fig. 6 zeigt eine Schnittdarstellung einer Festkörperelektrolytzelle mit zwei Referenzelektroden gemäß einem Ausführungsbeispiel.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-lonen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-lonen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, an welchem ein Aktivmaterial oder dessen Substrat angebracht ist. Bei dem Aktivmaterial für die Kathode handelt es sich beispielsweise um ein Metalloxid. Bei dem Aktivmaterial für die Anode handelt es sich beispielsweise um Graphit oder Silizium.

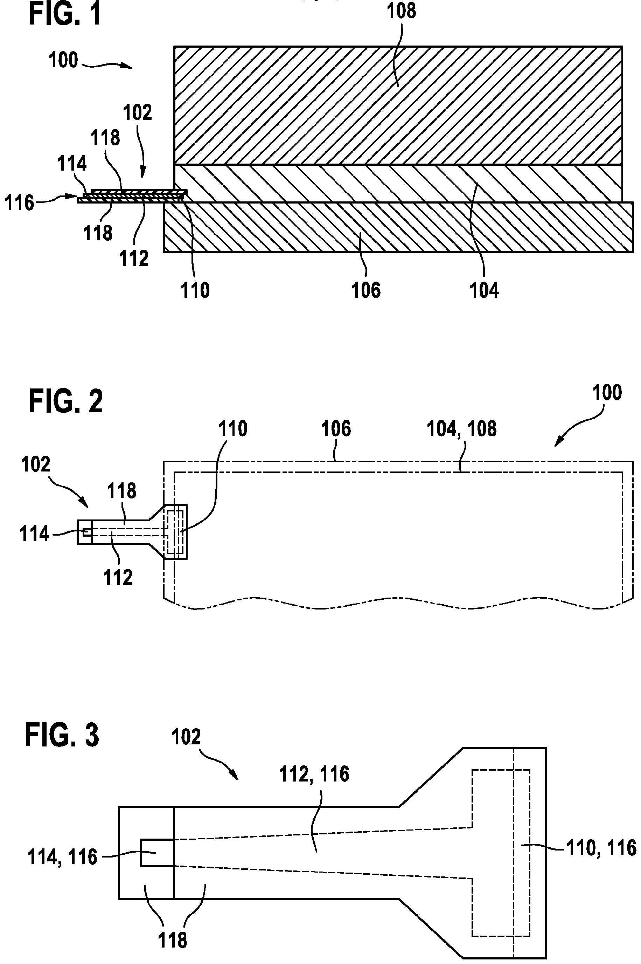

Fig. 1 zeigt eine Schnittdarstellung einer Festkörperelektrolytzelle 100 gemäß einem Ausführungsbeispiel. Die Schnittdarstellung ist als Schnitt quer zu Schichten der Festkörperelektrolytzelle 100 dargestellt. Eine Referenzelektrode 102 zum Erfassen einer lonenkonzentration ist in einen Elektrolytfestkörper 104 der Festkörperelektrolytzelle 100 eingebettet. Der Elektrolytfestkörper 104 ist in einem Zwischenraum zwischen einer Anode und einer Kathode der Festkörperelektrolytzelle 100 angeordnet. Anode und Kathode werden hier als Arbeitselektroden 106, 108 der Festkörperelektrolytzelle 100 bezeichnet, da der hier vorgestellte Ansatz an der Anode und/oder der Kathode angewandt werden kann. Dabei sind auch die geometrischen Ausmaße der Arbeitselektroden 106, 108, sowie die des Festkörperelektrolyten 104 relativ zueinander und absolut beispielhaft gewählt.

Durch den Elektrolytfestkörper 104 sind die Anode und Kathode voneinander beabstandet und elektrisch isoliert. In dem Elektrolytfestkörper 104 sind Ionen als Ladungsträger beweglich. Die Ionen reagieren mit Anodenaktivmaterial der Anode beziehungsweise Kathodenaktivmaterial der Kathode. Dabei lösen sich die Ionen an die Arbeitselektroden 106, 108 ab oder lagern sich an und nehmen Elektronen auf beziehungsweise geben Elektronen ab. Dadurch ergibt sich ein Ungleichgewicht einer Elektronenverteilung, wodurch zwischen den Arbeitselektroden 106, 108 ein elektrisches Potenzial aufgebaut wird. Wenn die Arbeitselektroden 106, 108 elektrisch leitend miteinander verbunden werden, fließt ein elektrischer Stromfluss zwischen den Arbeitselektroden 106, 108, um das Ungleichgewicht auszugleichen.

Die Referenzelektrode 102 ist beispielhaft nahe an einer der Arbeitselektroden 106, 108 der Festkörperelektrolytzelle 100 in dem Elektrolytfestkörper 104 eingebettet. Hier ist die Referenzelektrode 102 an der ersten Arbeitselektrode 106 eingebettet. Die Referenzelektrode 102 weist einen Reaktionsbereich 110 auf, der ionenleitend mit dem Elektrolytfestkörper 104 verbunden ist. Der Reaktionsbereich 110 und eine Zuleitung 112 zu dem Reaktionsbereich 110 sind elektrisch von der ersten Arbeitselektrode 106 isoliert. Die Ionen reagieren in dem Reaktionsbereich 110 an einer Grenzfläche der Referenzelektrode 102 mit der Referenzelektrode 102 wie sie mit der ersten Arbeitselektrode 106 reagieren. Die Ionen lagern sich an der Referenzelektrode 102 an oder lösen sich von der Referenzelektrode 102 ab und nehmen entweder Elektronen auf oder geben Elektronen ab. Zwischen der Referenzelektrode 102 und der zweiten Arbeitselektrode 108 baut sich ein elektrisches Referenzpotenzial auf. Das Referenzpotenzial kann abgegriffen werden, um eine Aussage über einen Zustand der Festkörperelektrolytzelle 100 zu erhalten. Das Abgreifen des Referenzpotenzials erfolgt insbesondere ohne Stromfluss, um die lonenkonzentration in statischem Zustand zu erfassen.

Die Zuleitung 112 ist hier als elektrisch leitende Leitschicht 116 zwischen zwei elektrisch isolierenden Isolierschichten 118 ausgebildet. Der Reaktionsbereich 110 ist ebenfalls durch die Leitschicht 116 ausgebildet. Im Reaktionsbereich 110 liegt eine Seite der Leitschicht 116 frei und steht in Kontakt zu dem Elektrolytfestkörper 104. Die Zuleitung 112 kann auch als Draht oder Litze ausgeführt sein.

In einem Ausführungsbeispiel ragen die Zuleitung 112 und ein elektrischer Anschlussbereich 114 der Referenzelektrode 102 über eine Kante der ersten Arbeitselektrode 106 über. Der Anschlussbereich 114 ist ebenfalls durch die Leitschicht 116 ausgebildet. Im Anschlussbereich 114 liegt eine Seite der Leitschicht 116 frei und kann zum Abgreifen eines im Reaktionsbereich 110 erzeugten elektrischen Signals kontaktiert werden. Hier sind der Reaktionsbereich 110 und der Anschlussbereich 114 auf gegenüberliegenden Seiten der Leitschicht 116 angeordnet. Dabei ist der Reaktionsbereich 110 auf einer der Arbeitselektrode 106 zugewandten Seite der Leitschicht 116 angeordnet.

Der Reaktionsbereich 110 und der Anschlussbereich 114 sind hier dadurch ausgebildet, dass die Isolierschichten 118 zueinander versetzt angeordnet sind. Dadurch liegt an einem Ende die Leitschicht 116 für den Reaktionsbereich 110 frei, während am gegenüberliegenden Ende die Leitschicht 116 für den Anschlussbereich 114 freiliegt.

In einem Ausführungsbeispiel weist die Referenzelektrode 102 zumindest im Reaktionsbereich 110 ein der ersten Arbeitselektrode 106 entsprechendes Aktivmaterial auf. Das Aktivmaterial kann eine Oberfläche des Reaktionsbereichs als dünne Schicht überziehen. Ebenso kann die Leitschicht 116 insgesamt aus dem Aktivmaterial bestehen. Der Reaktionsbereich 110 kann aus dem Aktivmaterial bestehen, während die Zuleitung 112 aus einem anderen elektrisch leitenden Material besteht.

Mit anderen Worten betrifft der hier vorgestellte Ansatz ein Verfahren zur Integration einer Referenzelektrode 102. Weiterhin betrifft der hier vorgestellte Ansatz einer Referenzelektrode 102 für eine Batteriezelle bestehend aus Festkörperbauteilen. Der hier vorgestellte Ansatz betrifft ferner eine Elektrode, die nach dem hier vorgestellten Verfahren hergestellt ist. Schließlich betrifft der hier vorgestellte Ansatz eine Batteriezelle, die eine solche Elektrode umfasst.

Die Referenzelektrode ist eine mit inertem Material überzogene, ionenleitfähige Elektrode, welche zur Vermessung der Elektrodenreaktionen auf der Kathode, respektive, Anode in einer Festkörperbatteriezelle stattfinden. Durch den drei-Elektroden-Aufbau können Aussagen bezüglich der Güte und des Zustandes der jeweiligen Elektroden getroffen werden.

Es wird eine im Verhältnis zur Elektrode der Batteriezelle kleine und dünne Referenzelektrode 102 mit je einer isolierenden Materialschicht von oben und unten verschließend dekoriert. Dabei sind die drei Schichten versetzt angeordnet, um eine isolierende Schutzschicht nach außen hin sowie die elektrochemische Interaktion des Referenzelektrodenmaterials mit dem Festkörperelektrolyten zu gewährleisten.

In einer Ausführungsform kann eine Spitze aus ionenleitfähigem Polymer, wie beispielsweise Polyethylenoxid angebracht werden, um den Ionentransport zu vereinfachen. Die isolierenden Schichten ermöglichen eine individuelle und auch kollektive Kontaktierung der Referenzelektrode 102 außerhalb der Zelle. Die Isolierung kann dabei beispielsweis aus Polyimid bestehen. Die Referenzelektrode 102 kann aus Lithium bestehen.

Für tiefergehende Vermessungen können mehrere Referenzelektroden 102 angebracht werden. Beispielsweise können Referenzelektroden 102 auf der Anoden- und Kathodenseite des Polymerelektrolyten zur separaten Charakterisierung von Anoden-, Kathoden und Separatorreaktionen angeordnet sein.

Die Referenzelektrode kann in situ lithiiert, also mit einer Lithium-Schicht überzogen werden, wenn sie beispielsweise aus Kupfer ist. Dazu wird die Referenzelektrode 102 kurzzeitig unter Stromfluss betrieben, wodurch sich Lithium Ionen auf dem Reaktionsbereich 110 niederschlagen.

Durch die Referenzelektrode kann eine Maximierung der Kontrolle über potentielle Nebenreaktionen an den Standardelektroden während des Batteriebetriebes in der Festkörperbatteriezelle durch in situ Vermessung erreicht werden.

Die hier vorgestellte Referenzelektrode 102 stellt ein abgestimmtes Materialsystem und eine optimierte Materialverwendung des Isolationsmaterials und des Referenzelektrodenmaterial in Kombination mit einer Festkörper(-Polymer)batteriezelle dar.

Der Festelektrolyt kann beispielsweise ein keramischer Elektrolyt, wie LLZO, oder LiLaZnO (Typ Garnet) sein. Ebenso kann der Festelektrolyt ein Polymer Elektrolyt, PEO sein. Auch Sulfidische Gläser wie z. B. PSPO sind möglich.

Die Referenzelektrode 102 kann beispielsweise aus Lithium, Gold, Kupfer, Zinn oder Bismut bestehen und in Form von Drähten mit ca. 5 bis 100 µm, Netzen, oder angespitzten Drähten verwendet werden.

Das Isolationsmaterial für die Referenzelektrode 102 kann aus Polyimiden sein.

Die Kathode kann aus Kathodenmaterialien, wie LiCoXO2 (oder Co Substitution mit Mn,Ni,Al), LiFePO4 ,LiMn2O4 sein.

Die Anode kann aus Anodenmaterialien, wie Lithium, Silizium, Graphit oder amorphem Kohlenstoff sein.

Fig. 2 zeigt eine Darstellung einer Festkörperelektrolytzelle 100 gemäß einem Ausführungsbeispiel. Die Festkörperelektrolytzelle 100 entspricht im Wesentlichen der Festkörperelektrolytzelle in Fig. 1. Hier ist die Festkörperelektrolytzelle 100 in einer Draufsicht dargestellt. Die Arbeitselektroden 106, 108 und der Elektrolytfestkörper 104 sind transparent dargestellt. Die erste Arbeitselektrode 106 steht in dieser Darstellung umlaufend über den Elektrolytfestkörper 104 über. Die Referenzelektrode 102 ist im Wesentlichen im Bereich des Überstands angeordnet. Lediglich der Reaktionsbereich 110 ist vollkommen in den Elektrolytfestkörper 104 eingebettet. Der Reaktionsbereich 110 ist an einer Kante der Arbeitselektrode 106 beziehungsweise einer Kante des Elektrolytfestkörpers 104 ausgerichtet.

Die Zuleitung 112 ist quer zu der Kante ausgerichtet. Hier weist die Referenzelektrode 100 in dieser Darstellung eine T-Form auf. Die Zuleitung 112 und der Anschlussbereich 114 treffen dabei mittig auf den Reaktionsbereich 110. Die Isolierschichten 118 stehen seitlich über die Zuleitung in einem Überlappungsbereich über. Die Isolierschichten 118 sind im Bereich des Reaktionsbereichs 110 breiter, als im Bereich der Zuleitung 112 und des Anschlussbereichs 114.

Die Referenzelektrode 102 kann auch eine L-Form aufweisen. Ebenso kann die Referenzelektrode 102 tangential an einer Ecke des Elektrolytfestkörpers 104 eingebettet sein. Durch die Anordnung an der Kante verdeckt die Referenzelektrode 102 nur eine sehr geringe Fläche des Elektrolytfestkörpers 104 und der Arbeitselektrode 106.

Fig. 3 zeigt eine Detaildarstellung einer Referenzelektrode 102 für eine Festkörperelektrolytzelle 100 gemäß einem Ausführungsbeispiel. Die Referenzelektrode 102 entspricht im Wesentlichen den Referenzelektroden in den Figuren 1 und 2. Zusätzlich dazu wird die Zuleitung 112 zum Reaktionsbereich hin breiter. Die Kanten der Isolierschichten 118 verlaufen dagegen im Bereich der Zuleitung 112 parallel zueinander. Die Isolierschichten 118 sind in einer Haupterstreckungsrichtung der Zuleitung 112 zueinander versetzt, wodurch der Anschlussbereich 114 und der Reaktionsbereich 110 auf entgegengesetzten Seiten der Referenzelektrode 102 freiliegen.

In einem Ausführungsbeispiel wird die Referenzelektrode 102 durch wiederholtes Maskieren und Abscheiden von Material in den maskierten Bereichen hergestellt. Dabei wird auf einer nicht dargestellten Platte zuerst ein erster Abscheidebereich für die erste Isolierschicht 118 maskiert. In den ersten Abscheidebereich wird ein elektrisch isolierendes Material als die erste Isolierschicht 118 abgeschieden. Nachfolgend wird ein zweiter Abscheidebereich für die Leitschicht 116 maskiert. Der zweite Abscheidebereich ist mit Ausnahme des Reaktionsbereichs 110 umlaufend kleiner als die erste Isolierschicht 118. Im zweiten Abscheidebereich wird ein elektrisch leitendes Material als die Leitschicht 116 auf die erste Isolierschicht 118 abgeschieden. Abschließend wird ein dritter Abscheidebereich maskiert. Der dritte Abscheidebereich entspricht dabei im Wesentlichen dem ersten Abscheidebereich. Im Anschlussbereich 114 steht der dritte Abscheidebereich von einer Kante der Leitschicht 116 zurück, um diese freizulassen. Im Bereich des Reaktionsbereichs 110 steht der dritte Abscheidebereich über die Kante der Leitschicht 116 über. Die zweite Isolierschicht 118 wird auf die erste Isolierschicht 118 und die Leitschicht 116 abgeschieden. Die fertige Referenzelektrode 102 wird anschließend von der Platte getrennt und in den Elektrolytfestkörper eingebettet.

Zum Einbetten kann die vorgefertigte Referenzelektrode 102 in einer Aussparung des Elektrolytfestkörpers angeordnet werden. Ebenso kann die Referenzelektrode 102 auf einer der Arbeitselektroden angeordnet werden. Dann kann der Elektrolytfestkörper aufgesetzt werden. Ebenso kann der Elektrolytfestkörper auf der Arbeitselektrode abgeschieden werden, wobei die Referenzelektrode umschlossen und eingebettet wird.

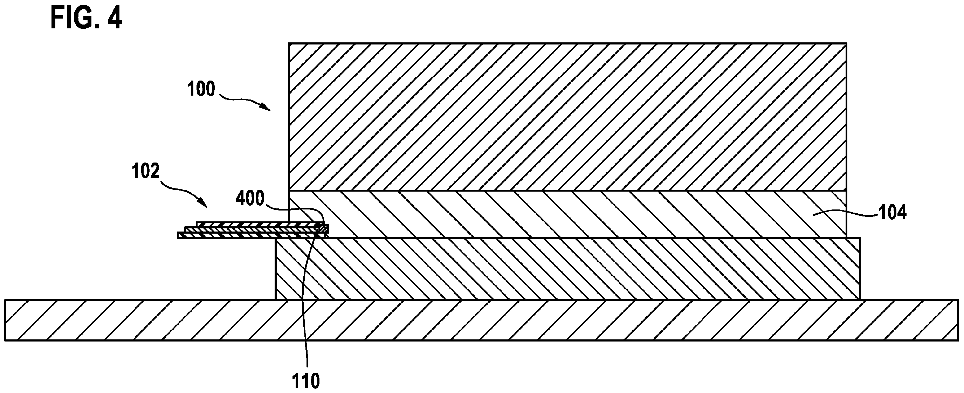

Fig. 4 zeigt eine Schnittdarstellung einer Festkörperelektrolytzelle 100 mit einer Referenzelektrode 102 mit einer Startschicht 400 gemäß einem Ausführungsbeispiel. Die Festkörperelektrolytzelle 100 entspricht dabei im Wesentlichen der Festkörperelektrolytzelle in den Figuren 1 und 2. Zusätzlich dazu bedeckt die Startschicht 400 bereits vor dem Abscheiden des Elektrolytfestkörpers 104 den Reaktionsbereich 110 der Referenzelektrode 102. Ein Material des Elektrolytfestkörpers 104 lagert sich beim Abscheiden an die Startschicht 400 an und erzeugt so eine sehr gute Verbindung zwischen der Startschicht und dem Elektrolytfestkörper 104.

Die Startschicht 400 ist aus einem ionenleitenden Material. Eigenschaften des Materials der Startschicht 400 entsprechen damit im Wesentlichen den Eigenschaften des Materials des Elektrolytfestkörpers 104. Das Material der Startschicht 400 kann das gleiche Material sein, wie das Material des Elektrolytfestkörpers 104.

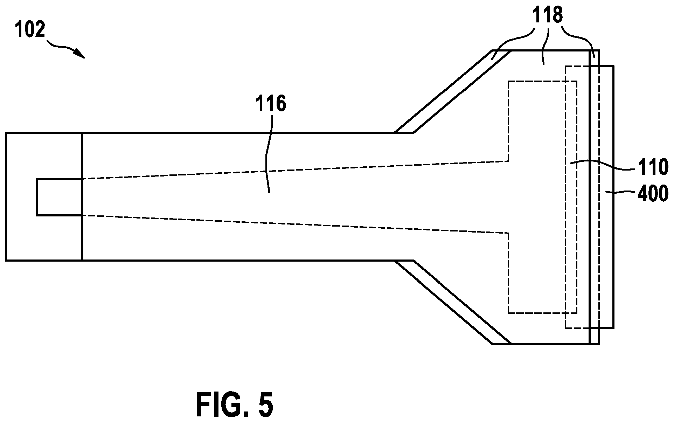

Fig. 5 zeigt eine Detaildarstellung einer Referenzelektrode 102 mit einer Startschicht 400 für eine Festkörperelektrolytzelle 100 gemäß einem Ausführungsbeispiel. Die Referenzelektrode 102 entspricht im Wesentlichen der Referenzelektrode in Fig. 3. Zusätzlich dazu weist die Referenzelektrode 102 wie in Fig. 4 die Startschicht 400 auf. Die Startschicht 400 wird wie die Leitschicht 116 und die Isolierschichten durch Maskieren und anschließendes Abscheiden von Material der Startschicht 400 erzeugt. Der Abscheidebereich für die Startschicht 400 wird auf der ersten Isolierschicht 118 maskiert. Dabei kann der Abscheidebereich für die Startschicht 400 maskiert werden, bevor die Leitschicht 116 abgeschieden wird, oder nachdem die Leitschicht 116 abgeschieden worden ist. Durch die Startschicht 400 ist der Reaktionsbereich 110 vollständig von Material umschlossen und liegt nicht frei.

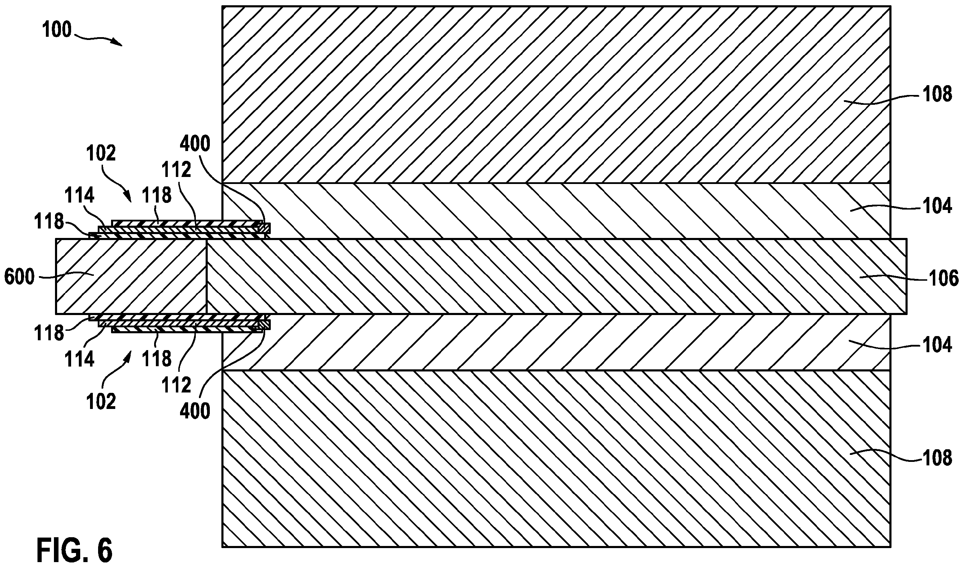

Fig. 6 zeigt eine Schnittdarstellung einer Festkörperelektrolytzelle 100 mit zwei Referenzelektroden 102 gemäß einem Ausführungsbeispiel. Die Festkörperelektrolytzelle 100 entspricht im Wesentlichen der Festkörperelektrolytzelle in Fig. 1. Zusätzlich zu der ersten Referenzelektrode 102 ist auf der gegenüberliegenden Seite der ersten Arbeitselektrode 106 eine zweite Referenzelektrode 102 angeordnet. Die zweite Referenzelektrode 102 entspricht dabei im Wesentlichen der ersten Referenzelektrode 102.

Im Gegensatz zu der Festkörperelektrolytzelle in den Figuren 1 und 4 weist die hier dargestellte Festkörperelektrolytzelle 100 an der ersten Arbeitselektrode 106 eine Verlängerung 600 auf. Eine Schichtdicke der Verlängerung 600 entspricht in dieser Darstellung der Schichtdicke der ersten Arbeitselektrode 106. Die Verlängerung 600 kann aus einem anderen Material als die erste Arbeitselektrode 106 sein. Ebenso kann die Verlängerung 600 aus dem gleichen Material, wie die erste Arbeitselektrode 106 sein. Die Zuleitungen 112 und die Anschlussbereiche 114 beider Referenzelektroden 102 sind im Bereich der Verlängerung 600 angeordnet. Durch die Verlängerung 600 können die Referenzelektroden 102 direkt auf die erste Arbeitselektrode 106 und die Verlängerung 600 abgeschieden werden. Dazu werden die Abscheidebereiche auf der ersten Arbeitselektrode 106 und der Verlängerung 600 maskiert. Durch eine Anpassung der Geometrien können mehrere Referenzelektroden 102 auch ohne die Verlängerung 600 abgeschieden werden.

In einem Ausführungsbeispiel entsprechen die Referenzelektroden 102 im Wesentlichen der Referenzelektrode in Fig. 5 bzw. Fig. 3. Dabei werden für die in Fig. 5 beschriebene Ausführungsform während der Herstellung der Referenzelektroden 102 Abscheidebereiche für die Startschichten 400 auf der ersten Arbeitselektrode 106 und den ersten Isolierschichten 118 maskiert und das Elektrolytfestkörpermaterial abgeschieden, bevor die zweiten Isolierschichten 118 abgeschieden werden. Nach der Fertigstellung der Referenzelektroden 102 wird der Elektrolytfestkörper 104 hergestellt und die Festkörperelektrolytzelle 100 durch die zweiten Arbeitselektroden 108 vervollständigt.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Festkörperelektrolytzelle (100), **dadurch gekennzeichnet, dass** zumindest eine Referenzelektrode (102) in einem Elektrolytfestkörper (104) der Festkörperelektrolytzelle (100) eingebettet ist, wobei ein Reaktionsbereich (110) der Referenzelektrode (102) ionenleitend mit dem Elektrolytfestkörper (104) verbunden ist und elektrisch von einer Arbeitselektrode (106, 108) der Festkörperelektrolytzelle (100) isoliert ist.

2. Festkörperelektrolytzelle (100) gemäß Anspruch 1, bei der die Referenzelektrode (102) schichtweise aufgebaut ist, wobei eine elektrisch isolierende Isolierschicht (118) der Referenzelektrode (102) zwischen einer den Reaktionsbereich (110) ausbildenden elektrisch leitenden Leitschicht (116) der Referenzelektrode (102) und der Arbeitselektrode (106, 108) angeordnet ist, wobei die Leitschicht (116) vorzugsweise zwischen 10 µm und 0,1 µm, insbesondere zwischen 5 µm und 0,5 µm, insbesondere zwischen 2 µm und 1 µm dick ist.

3. Festkörperelektrolytzelle (100) gemäß Anspruch 2, bei der die Isolierschicht (118) aus einem Polyimidmaterial besteht.

4. Festkörperelektrolytzelle (100) gemäß einem der Ansprüche 2 bis 3, bei der eine weitere Isolierschicht (118) auf einer von der Arbeitselektrode (106, 108) abgewandten Seite der Leitschicht (116) angeordnet ist, wobei der Reaktionsbereich (110) durch zumindest eine der Isolierschichten (118) ausgespart ist.

5. Festkörperelektrolytzelle (100) gemäß einem der vorhergehenden Ansprüche, bei der der Reaktionsbereich (110) an einer Kante der Arbeitselektrode (106, 108) ausgerichtet ist.

6. Festkörperelektrolytzelle (100) gemäß einem der vorhergehenden Ansprüche, bei der die Referenzelektrode (102) zumindest im Reaktionsbereich (110) ein Aktivmaterial der Arbeitselektrode (106, 108) aufweist.

7. Verfahren zum Herstellen einer Festkörperelektrolytzelle (100), **dadurch gekennzeichnet, dass** in einem Schritt des Einbettens eine Referenzelektrode (102) in einen Elektrolytfestkörper (104) der Festkörperelektrolytzelle (100) eingebettet wird, wobei ein Reaktionsbereich (110) der Referenzelektrode (102) ionenleitend mit dem Elektrolytfestkörper (104) verbunden wird und elektrisch von einer Arbeitselektrode (106, 108) der Festkörperelektrolytzelle (100) isoliert wird.

8. Verfahren gemäß Anspruch 7, bei dem im Schritt des Einbettens eine elektrisch isolierende Isolierschicht (118) der Referenzelektrode (102) zwischen einer elektrisch leitenden Leitschicht (116) der Referenzelektrode (102) und der Arbeitselektrode (106, 108) angeordnet wird, und der Elektrolytfestkörper (104) auf dem Reaktionsbereich (110) und der Arbeitselektrode (106, 108) abgeschieden wird.

9. Verfahren gemäß Anspruch 7, bei dem im Schritt des Einbettens die Referenzelektrode (102) mit einer zwischen zwei Isolierschichten (118) elektrisch isolierten Leitschicht (116) auf der Arbeitselektrode (106, 108) angeordnet wird, wobei der Reaktionsbereich (110) durch zumindest eine der Isolierschichten (118) ausgespart wird.

10. Verfahren gemäß einem der Ansprüche 7 bis 9, bei dem im Schritt des Einbettens die Referenzelektrode (102) mit einer mit dem Reaktionsbereich (110) ionenleitend verbundenen Startschicht (400) aus Elektrolytfestkörpermaterial eingebettet wird, wobei der Elektrolytfestkörper (104) auf der Startschicht (400) und der Arbeitselektrode (106, 108) abgeschieden wird.

11. Verfahren gemäß einem der Ansprüche 7 bis 9, bei dem im Schritt des Einbettens der Reaktionsbereich (110) in blankem Zustand eingebettet wird, wobei in einem nachfolgenden Schritt des Anlagerns Ionen aus dem Elektrolytfestkörper (104) an den Reaktionsbereich (110) angelagert werden.

12. Verfahren gemäß einem der Ansprüche 7 bis 11, bei dem im Schritt des Einbettens die Referenzelektrode (102) mit einem über eine Kante der Arbeitselektrode (106, 108) ragenden Anschlussbereich (114) eingebettet wird.

## Claims

1. Solid electrolyte cell (100), **characterized in that** at least one reference electrode (102) is embedded in an electrolyte solid body (104) of the solid electrolyte cell (100), wherein a reaction region (110) of the reference electrode (102) is connected to the electrolyte solid body (104) for the conduction of ions and is electrically insulated from a working electrode (106, 108) of the solid electrolyte cell (100).

2. Solid electrolyte cell (100) according to Claim 1, wherein the reference electrode (102) is built from layers, wherein an electrically insulating insulation layer (118) of the reference electrode (102) is arranged between an electrically conducting conduction layer (116) of the reference electrode (102), with the conduction layer forming the reaction region (110), and the working electrode (106, 108), wherein the conduction layer (116) preferably has a thickness of between 10 µm and 0.1 µm, in particular between 5 µm and 0.5 µm, in particular between 2 µm and 1 µm.

3. Solid electrolyte cell (100) according to Claim 2, wherein the insulation layer (118) consists of a polyimide material.

4. Solid electrolyte cell (100) according to any of Claims 2 to 3, wherein a further insulation layer (118) is arranged on a side of the conduction layer (116) facing away from the working electrode (106, 108), wherein the reaction region (110) is exposed through at least one of the insulation layers (118).

5. Solid electrolyte cell (100) according to any of the preceding claims, wherein the reaction region (110) is aligned with an edge of the working electrode (106, 108).

6. Solid electrolyte cell (100) according to any of the preceding claims, wherein the reference electrode (102) has an active material of the working electrode (106, 108) at least in the reaction region (110).

7. Method for producing a solid electrolyte cell (100), **characterized in that** in an embedding step a reference electrode (102) is embedded in an electrolyte solid body (104) of the solid electrolyte cell (100), wherein a reaction region (110) of the reference electrode (102) is connected to the electrolyte solid body (104) for the conduction of ions and is electrically insulated from a working electrode (106, 108) of the solid electrolyte cell (100).

8. Method according to Claim 7, wherein in the embedding step an electrically insulating insulation layer (118) of the reference electrode (102) is arranged between an electrically conducting conduction layer (116) of the reference electrode (102) and the working electrode (106, 108), and the electrolyte solid body (104) is deposited on the reaction region (110) and the working electrode (106, 108).

9. Method according to Claim 7, wherein in the embedding step the reference electrode (102) is arranged with a conduction layer (116), which is electrically insulated between two insulation layers (118), on the working electrode (106, 108), wherein the reaction region (110) is exposed through at least one of the insulation layers (118).

10. Method according to any of Claims 7 to 9, wherein in the embedding step the reference electrode (102) is embedded with a starting layer (400) made of electrolyte solid body material, which is connected to the reaction region (110) for the conduction of ions, wherein the electrolyte solid body (104) is deposited on the starting layer (400) and the working electrode (106, 108).

11. Method according to any of Claims 7 to 9, wherein in the embedding step the reaction region (110) is embedded in a blank state, wherein, in a subsequent accumulation step, ions from the electrolyte solid body (104) are accumulated on the reaction region (110).

12. Method according to any of Claims 7 to 11, wherein in the embedding step the reference electrode (102) is embedded with a connection region (114) projecting beyond an edge of the working electrode (106, 108).

## Revendications

1. Cellule à électrolyte solide (100), **caractérisée en ce qu'**au moins une électrode de référence (102) est incorporée dans un électrolyte à l'état solide (104) de la cellule à électrolyte solide (100), dans laquelle une zone de réaction (110) de l'électrode de référence (102) est reliée par conduction ionique à l'électrolyte à l'état solide (104) et est isolée électriquement d'une électrode de travail (106, 108) de la cellule à électrolyte solide (100).

2. Cellule à électrolyte solide (100) selon la revendication 1, dans laquelle l'électrode de référence (102) est réalisée en couches, dans laquelle une couche d'isolation (118) électriquement isolante de l'électrode de référence (102) est disposée entre une couche de conduction (116) électriquement conductrice de l'électrode de référence (102), qui forme la zone de réaction (110), et l'électrode de travail (106, 108), dans laquelle la couche de conduction (116) présente de préférence une épaisseur comprise entre 10 µm et 0,1 µm, notamment entre 5 µm et 0,5 µm, en particulier entre 2 µm et 1 µm.

3. Cellule à électrolyte solide (100) selon la revendication 2, dans laquelle la couche d'isolation (118) est constituée d'un matériau de polyimide.

4. Cellule à électrolyte solide (100) selon l'une quelconque des revendications 2 à 3, dans laquelle une autre couche d'isolation (118) est disposée sur une face de la couche de conduction (116) qui est opposée à l'électrode de travail (106, 108), dans laquelle la zone de réaction (110) est évidée par au moins l'une des couches d'isolation (118).

5. Cellule à électrolyte solide (100) selon l'une quelconque des revendications précédentes, dans laquelle la zone de réaction (110) est alignée sur un bord de l'électrode de travail (106, 108).

6. Cellule à électrolyte solide (100) selon l'une quelconque des revendications précédentes, dans laquelle l'électrode de référence (102) comporte, au moins dans la zone de réaction (110), un matériau actif de l'électrode de travail (106, 108).

7. Procédé de fabrication d'une cellule à électrolyte solide (100), **caractérisé en ce que**, lors d'une étape d'incorporation, une électrode de référence (102) est incorporée dans un électrolyte solide (104) de la cellule à électrolyte solide (100), dans lequel une zone de réaction (110) de l'électrode de référence (102) est reliée par conduction ionique à l'électrolyte à l'état solide (104) et est isolée électriquement d'une électrode de travail (106, 108) de la cellule à électrolyte solide (100) .

8. Procédé selon la revendication 7, dans lequel, lors de l'étape d'incorporation, une couche d'isolation (118) électriquement isolante de l'électrode de référence (102) est disposée entre une couche de conduction (116) électriquement conductrice de l'électrode de référence (102) et l'électrode de travail (106, 108), et l'électrolyte à l'état solide (104) est déposé sur la zone de réaction (110) et l'électrode de travail (106, 108) .

9. Procédé selon la revendication 7, dans lequel, lors de l'étape d'incorporation, l'électrode de référence (102) est disposée sur l'électrode de travail (106, 108) avec une couche de conduction (116) isolée électriquement entre deux couches d'isolation (118), dans lequel la zone de réaction (110) est évidée par au moins l'une des couches d'isolation (118).

10. Procédé selon l'une quelconque des revendications 7 à 9, dans lequel, lors de l'étape d'incorporation, l'électrode de référence (102) est incorporée avec une couche de départ (400) en matériau d'électrolyte à l'état solide, reliée par conduction ionique à la zone de réaction (110), dans lequel l'électrolyte à l'état solide (104) est déposé sur la couche de départ (400) et sur l'électrode de travail (106, 108).

11. Procédé selon l'une quelconque des revendications 7 à 9, dans lequel, lors de l'étape d'incorporation, la zone de réaction (110) est incorporée à l'état vierge, dans lequel, lors d'une étape de dépôt ultérieure, des ions provenant de l'électrolyte à l'état solide (104) sont déposés sur la zone de réaction (110).

12. Procédé selon l'une quelconque des revendications 7 à 11, dans lequel, lors de l'étape d'incorporation, l'électrode de référence (102) est incorporée avec une zone de connexion (114) dépassant d'un bord de l'électrode de travail (106, 108).
